# EUROPEAN PATENT SPECIFICATION

(11) **EP 4 413 624 B1**
(45) Date of publication and mention of the grant of the patent: **30.07.2025**
(21) Application number: 22782899.3
(22) Date of filing: 06.10.2022
(51) Int. Cl.: H01M 8/04014, H01M 8/04111, H01M 8/04082, H01M 8/0612, H01M 8/2484, H01M 8/249, H01M 8/12

(54) **MODULAR FUEL CELL SYSTEM**
MODULARES BRENNSTOFFZELLENSYSTEM
SYSTÈME DE PILE À COMBUSTIBLE MODULAIRE

(30) Priority: 06.10.2021 EP 21201222
(43) Date of publication of application: 14.08.2024
(73) Proprietor: Accelleron Switzerland Ltd., 5400 Baden (CH)
(72) Inventor: TISSOT, Jean-Francois, 68750 Bergheim (FR)
(74) Representative: Zimmermann & Partner Patentanwälte mbB
(86) International application number: PCT/EP2022/077830
(87) International publication number: WO 2023/057580

(56) References cited:
- WO-A2-2015/169940
- CN-A- 112 909 309
- DE-A1- 102016 200 208
- US-A1- 2016 190 622

## Description

### TECHNICAL FIELD

Embodiments of the present disclosure relate to a modular fuel cell system.

### BACKGROUND

Fuel cells have the potential to offer clean, quiet and efficient power generation. Unlike thermal energy-based engines, fuel cells use an electrochemical or battery-like process to convert the chemical energy associated with the conversion of hydrogen gas into water into electricity. Fuel cell systems are used in the art for generating large electricity outputs amounts. Fuel cell systems include several fuel cells and optionally a turbocharger or turbocharging system.

One drawback of prior art systems is that the individual components of fuel cell systems are not flexibly adaptable to the customer's needs. For example, oftentimes a fuel cell system is designed for a specific output power, i.e. the fuel cells, the turbocharger and all other additional components of the system (e.g. the water supply or the exhaust gas system) are designed for a specific system having a specific output power. In case the desired application requires other parameters, such as a different output power, the entire fuel cell system needs to be redesigned, e.g. for matching the turbocharger to the fuel cells and for providing a suitable supply and exhaust system.

There is a continuous demand for improved fuel cell systems. In particular, there is a need for fuel cell systems which are highly flexible and which are designed in such a manner that a large output power range can be covered with a limited number of components, without having to redesign each of the components for a particular application.

CN112909309A discloses a multi-stack-group fuel cell system comprising a fuel cell stack group, a hydrogen supply distributor system, an air supply distributor system, a thermal management system and an electronic control system.

### SUMMARY

In light of the above, a modular fuel cell system according to independent claim 1 is provided. Further aspects, advantages, and features are apparent from the dependent claims, the description, and the accompanying drawings.

According to an aspect of the present disclosure, a modular fuel cell system is provided. The modular fuel cell system includes a plurality of fuel cell modules. Each fuel cell module includes a fuel cell, an intake air interface for providing intake air to the fuel cell module, and an exhaust gas interface for conducting away exhaust gas from the fuel cell module. The modular fuel cell system includes an intake air manifold connected to each of the intake air interfaces of the fuel cell modules. The intake air manifold contains a plurality of intake air modules. Each intake air module is releasably connected to at least one adjacent intake air module and connected to at least one of the intake air interfaces for providing intake air from the intake air manifold to the at least one of the intake air interfaces. The modular fuel cell system further includes an exhaust gas manifold connected to each of the exhaust gas interfaces of the fuel cell modules. The exhaust gas manifold contains a plurality of exhaust gas modules. Each exhaust gas module is releasably connected to at least one adjacent exhaust gas module and connected to at least one of the exhaust gas interfaces for receiving exhaust gas from at least one of the exhaust gas interfaces. The modular fuel cell system further includes a turbocharging system including at least one turbocharger having a compressor and a turbine. The turbine is in fluid connection with the exhaust gas manifold for receiving the exhaust gas from the exhaust gas manifold, and the compressor is in fluid connection with the intake air manifold for providing charged intake air to the intake air manifold.

Those skilled in the art will recognise additional features and advantages upon reading the following detailed description, and upon viewing the accompanying drawings.

### BRIEF DESCRIPTION OF THE DRAWINGS

The components in the Figures are not necessarily to scale, instead emphasis being placed upon illustrating the principles of the invention. Moreover, in the Figures, like reference signs designate corresponding parts. The accompanying drawings relate to embodiments of the disclosure and are described in the following:
- Fig. 1: shows a schematic view of a modular fuel cell system according to embodiments described herein;
- Fig. 2a: shows a schematic view of a fuel cell module according to embodiments described herein;
- Fig. 2b: shows a schematic view of a fuel cell module according to further embodiments described herein;
- Fig. 3: shows a schematic view of a composite fuel cell module according to embodiments described herein;
- Fig. 4: shows a schematic view of a modular fuel cell system according to further embodiments described herein;
- Fig. 5a: shows a schematic view of a part of a modular fuel cell system apparatus according to further embodiments described herein;
- Fig. 5b: shows a schematic view of a part of a modular fuel cell system apparatus according to further embodiments described herein;
- Fig. 5c: shows a schematic view of a modular fuel cell system according to further embodiments described herein; and
- Fig. 6: shows a schematic view of a part of a modular fuel cell system according to further embodiments described herein;
- Fig. 7: shows a schematic view of a part of a modular fuel cell system apparatus according to further embodiments described herein;
- Fig. 8: shows a schematic view of a part of a modular fuel cell system apparatus according to further embodiments described herein.

### DETAILED DESCRIPTION OF EMBODIMENTS

Reference will now be made in detail to the various embodiments, one or more examples of which are illustrated in each figure. Each example is provided by way of explanation and is not meant as a limitation. For example, features illustrated or described as part of one embodiment can be used on or in conjunction with any other embodiment to yield yet a further embodiment. It is intended that the present disclosure includes such modifications and variations.

Within the following description of the drawings, the same reference numbers refer to the same or to similar components. Generally, only the differences with respect to the individual embodiments are described. Unless specified otherwise, the description of a part or aspect in one embodiment can apply to a corresponding part or aspect in another embodiment as well.

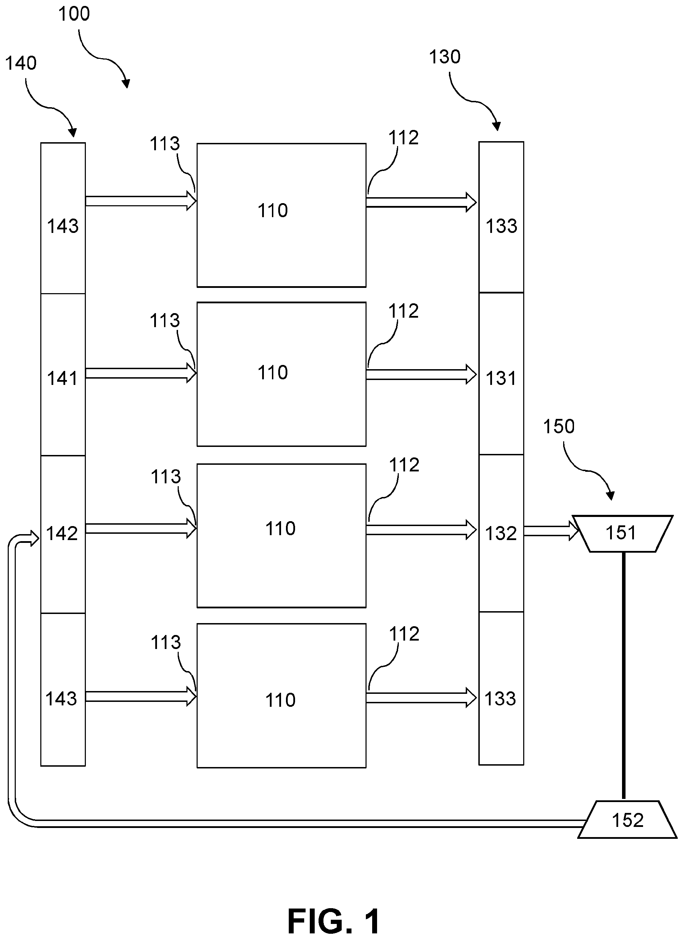

With exemplary reference to Fig. 1, a modular fuel cell system 100 is described. The modular fuel cell system 100 includes a plurality of fuel cell modules 110, an intake air manifold 140, an exhaust gas manifold 130 and a turbocharging system 150.

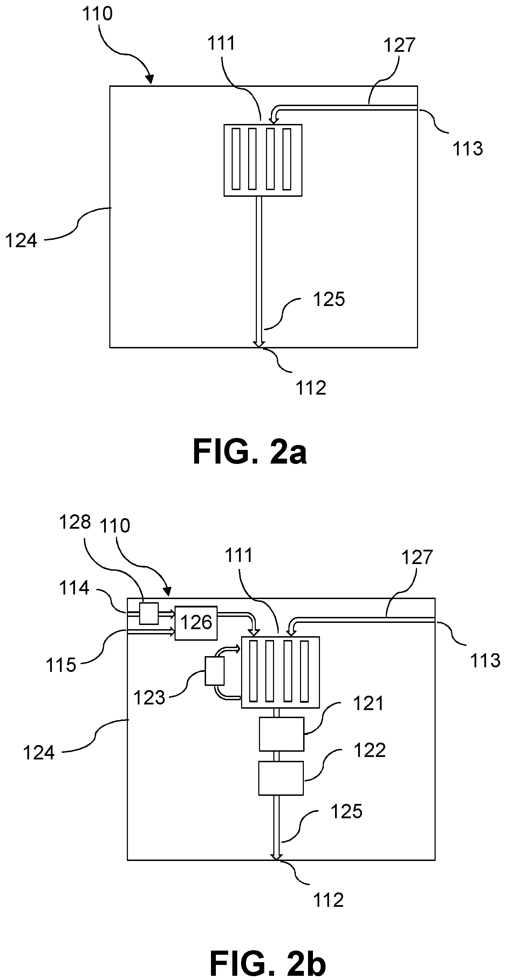

With exemplary reference to Fig. 2a, a fuel cell module 110 is described. The fuel cell module 110 comprises a fuel cell 111. The fuel cell 111 may be a single fuel cell or a stack of fuel cells (as illustrated in Figure 2a, showing a stack of four fuel cells) or a plurality of individual fuel cells or fuel cell stacks.

The fuel cell module 110 further includes an intake air interface 113 for providing intake air to the fuel cell module 110, and an exhaust gas interface 112 for conducting away exhaust gas from the fuel cell module 110. The interface may also be regarded as a connection point for connecting an external device or external fluid line to the fuel cell module 110.

The fuel cell module 110 may further include an intake air line 127 which is mechanically coupled to the intake air interface 113 and the fuel cell 111. The intake air line fluidically connects the intake air interface 113 with the fuel cell 111 and allows for conveying intake air, in particular charged intake air, from a component external of the fuel cell module 110 via the intake air interface 113, and the intake air line 127 to the fuel cell 111.

The fuel cell module 110 may further include an exhaust gas line 125 which is mechanically coupled to the exhaust gas interface 112 and the fuel cell 111. The exhaust gas line 125 fluidically connects the exhaust gas interface 112 with the fuel cell 111 and allows for conveying exhaust gas, in particular charged exhaust gas, from the fuel cell 111, via the exhaust gas line 125 and the exhaust gas interface 112 to a component external of the fuel cell module 110.

The fuel cell module 110 may include a housing 124. The intake air interface 113 and the exhaust gas interface 112 may be integrated into the housing 125. In a preferred embodiment, the housing is a pressurised housing or vessel.

With reference back to Figure 1, the fuel cell system 100 further includes an intake air manifold 140. The intake air manifold is connected to, in particular mechanically and fluidically connected to, each of the intake air interfaces 113 of the fuel cell modules 110. The intake air manifold 140 contains a plurality of intake air modules 141, 142, 143. Each intake air module 141, 142, 143 is releasably connected, preferably fluidically and mechanically releasably connected, to at least one adjacent intake air module 141, 142, 143 and connected, preferably fluidically and mechanically releasably connected, to at least one of the intake air interfaces 113 for providing intake air from the intake air manifold 140 to the at least one of the intake air interfaces 113.

The intake air modules are similarly structured and dimensioned. The intake air manifold 140 includes as few as possible different types of intake air modules 141, 142, 143 to simplify the interconnection system with the fuel cells and to facilitate simple scaling of the fuel cell system 100, in particular the output power of the fuel cell system 100, with as few types of components as possible. Typically, each intake air module is connected to the same number of intake air interfaces 113 of the fuel cell modules 110. Preferably each intake air module is connected to one single intake air interface 113 of the fuel cell module 110.

In an illustrative embodiment, the intake air manifold 140 may contain one or more connecting intake air modules 141, which each connect to two adjacent intake air modules. The intake air manifold 140 may further contain a terminal intake air module 143, which is connected to only one adjacent intake air module 141. The terminal intake air module 143 may be substantially identical to the connecting intake air module 141 apart from a terminal side wall which may be releasably connected to the terminal intake air module 143. The intake air manifold 140 may further contain an inflow air module 142 for connecting the intake air manifold 140 with the turbocharging system 150. The inflow air module 142 may be substantially identical to the connecting intake air module 141 apart from an interface for connecting the intake air manifold 140 with the turbocharging system 150.

The fuel cell system 100 further includes an exhaust gas manifold 130. The exhaust gas manifold 130 is connected to, in particular mechanically and fluidically connected to, each of the exhaust gas interfaces 112 of the fuel cell modules 110. The intake air manifold 140 contains a plurality of exhaust gas modules 131, 132, 133. Each exhaust gas module 131, 132, 133 is releasably connected, preferably fluidically and mechanically releasably connected, to at least one adjacent exhaust gas module 131, 132, 133 and connected, preferably fluidically and mechanically releasably connected, to at least one of the exhaust gas interfaces 112 for receiving exhaust gas from at least one of the exhaust gas interfaces 112.

The exhaust gas modules are similarly structured and dimensioned. The exhaust gas modules may be substantially identically structured and dimensioned in comparison with the intake gas modules. The exhaust gas manifold 130 includes as few as possible different types of exhaust gas modules 131, 132, 133 to facilitate simple scaling of the fuel cell system 100, in particular the output power of the fuel cell system 100, with as few types of components as possible. Typically, each exhaust gas module is connected to the same number of exhaust gas interfaces 112 of the fuel cell modules 110. Preferably each exhaust gas module is connected to one single exhaust gas interface 112 of the fuel cell module 110.

In an illustrative embodiment, the exhaust gas manifold 130 may contain one or more connecting exhaust gas modules 131, which each connect to two adjacent exhaust gas modules. The exhaust gas manifold 130 may further contain a terminal exhaust gas module 133, which is connected to only one adjacent exhaust gas module 131. The terminal exhaust gas module 133 may be substantially identical to the connecting exhaust gas module 131 apart from a terminal side wall which may be releasably connected to the terminal exhaust gas module 133. The exhaust gas manifold 130 may further contain an outflow gas module 132 for connecting the exhaust gas manifold 130 with the turbocharging system 150. The outflow gas module 132 may be substantially identical to the connecting exhaust gas module 131 apart from an interface for connecting the exhaust gas manifold 130 with the turbocharging system 150.

The intake air manifold 140, the exhaust gas manifold 130 as well as the simplified interconnection system (interfaces) of the fuel cells allow for flexibly scaling the fuel cell system 100 as desired while only requiring very few different components. The intake air manifold 140 and the exhaust gas manifold 130 of the present disclosure also allow for subsequently modifying an already assembled fuel cell system; or a fuel cell system, which is already in commission, in case the desired system parameters have changed. For example, an already installed fuel cell system according to the present disclosure may be further upscaled without the need for redesigning the entire fuel cell system. Instead, few additional components need to be added in such a case. Moreover, the fuel cell system of the present disclosure allows for a clear border between fuel cell modules, various supply manifolds (such as intake and exhaust manifolds) and the turbocharging system (as described further below). This allows for a better overview and simplified access to the components of the fuel cell system.

With further reference to Figure 1, the fuel cell system 100 includes a turbocharging system 150. The turbocharging system 150 includes at least one turbocharger having a compressor 152 and a turbine 151. The turbocharger may be a shafted turbocharger, wherein the compressor 152 and the turbine 151 are mechanically coupled through a shaft. The shafted turbocharger may preferably be an electric turbocharger (allowing for electrically powering the shaft or for obtaining electric power from the shaft). Alternatively, the turbocharger may include an electric compressor and an electric turbine, which are preferably not coupled by a shaft. The turbine 151 is in fluid connection with the exhaust gas manifold 130 for receiving the exhaust gas from the exhaust gas manifold 130, and the compressor 152 is in fluid connection with the intake air manifold 140 for providing charged intake air to the intake air manifold 140.

The fuel cell system according to the present disclosure includes one turbocharging system with one or more turbochargers which provides charged air to the entire intake air manifold and which is then distributed to the individual fuel cell modules. Compared to fuel cell systems which include a separate turbocharger for each fuel cell, the fuel cell system of the present disclosure allows for substantially reducing the number of (turbocharging) components and therefore reducing the costs. Moreover, the present fuel cell system advantageously has a large turbocharging system which significantly increases the turbocharging efficiency compared to having several smaller size turbochargers and thus the energy efficiency of the entire fuel cell system.

The fuel cell system 100 of the present disclosure is preferably built up with as few different types of fuel cell modules as possible. In a preferred embodiment the fuel cell system only includes two or three different types of fuel cell modules. The two or three different types of fuel cell modules may each differ in output power and/or size of the housing. For example, a power range of the fuel cell system 100 may be covered between 25 kW up to 100 MW with just having two or three different types of fuel cell modules 110. The fuel cell system of the present disclosure further allows for the possibility of combining different types of fuel cell modules each containing different types of fuel cells together.

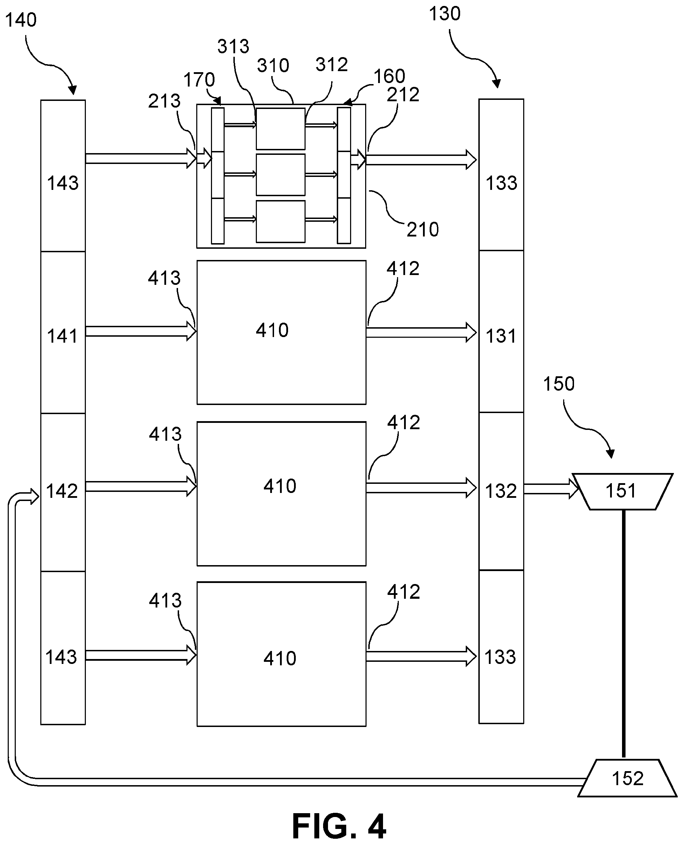

According to an embodiment, the plurality of fuel cell modules may include a first fuel cell module 110 and a second fuel cell module 410 (an example of the second fuel cell module 410 is illustrated in Figure 4). The first fuel cell module 110 and the second fuel cell module 410 preferably include the same type of components, and differ only in the achievable output power. The first and second fuel cell modules may also differ in output power and size, e.g. size of the housing 124. Overall output power means the maximum power for which the respective fuel cell module (overall meaning the sum of all of the fuel cells or fuel cell stacks contained in the respective fuel cell module) is technically designed for.

The overall output power of the second fuel cell module 410 may be larger than the overall output power of the first fuel cell module 110. Preferably, the overall output power of the second fuel cell module 410 is at least twice the overall output power of the first fuel cell module 110. More preferably, the overall output power of the second fuel cell module 410 is an integral multiple of the overall output power of the first fuel cell module 110.

For example, the first fuel cell module 110 may have an overall output power of 25 kW and the second fuel cell module 410 may have an overall output power of 100 kW. The entire modular fuel cell system may be constructed only with a plurality of the first fuel cell modules 110 and a plurality of the second fuel cell modules 410. Larger, megawatt, output power fuel cell systems may include several tens or hundreds of (first and second) fuel cell modules.

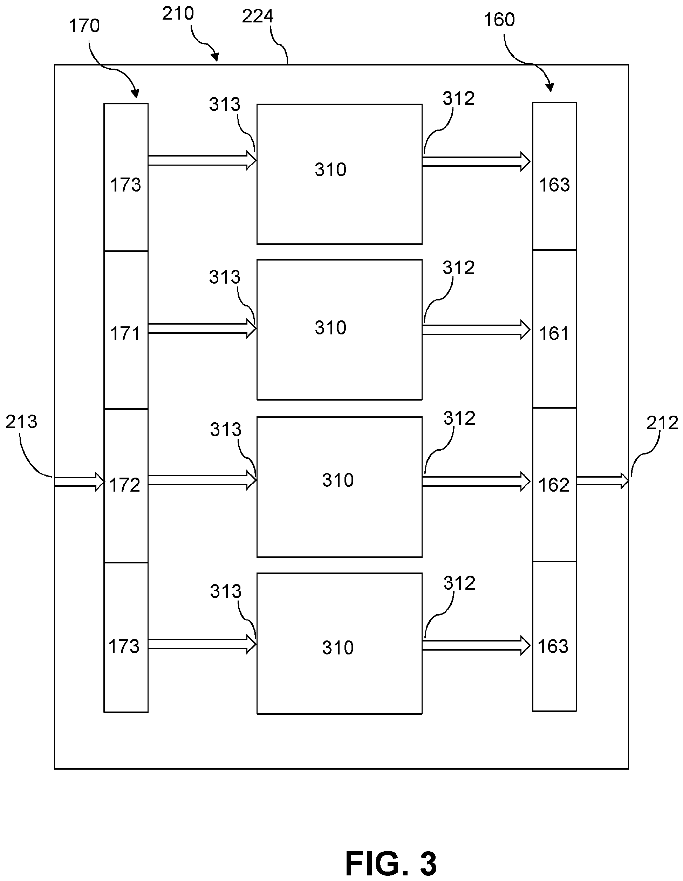

According to an embodiment, the modular fuel cell system 100 further includes a composite fuel cell module 210. Examples of a composite fuel cell 210 are illustrated in Figures 3 and 4. The composite fuel cell 210 comprises a plurality of fuel cell sub-modules 310. The composite fuel cell 210 is similar to fuel cell module 110 (and to second fuel cell module 410) in that the composite fuel cell 210 includes an intake air interface 213 for providing intake air to the fuel cell sub-modules 310, and an exhaust gas interface 212 for conducting away exhaust gas from the fuel cell sub-modules 310.

The fuel cell sub-modules 310 may preferably correspond to the first fuel cell module 110 according to any embodiment disclosed herein. In particular, each fuel cell sub-module 310 includes one or more fuel cells or one more fuel cell stacks, an intake air sub-interface 313 for providing intake air to the fuel cell sub-module 310, and an exhaust gas sub-interface 312 for conducting away exhaust gas from the fuel cell sub-module 310. The intake air may thus be conveyed from the intake air manifold 140 via the intake air interface 213 and subsequently the intake air sub-interface 313 to the fuel cell sub-module. The exhaust gas may be conveyed from the fuel cell sub-module 310, via the exhaust gas sub-interface 312 and subsequently the exhaust gas interface 212 to the exhaust gas manifold 130.

In an embodiment, the overall output power of the second fuel cell module 410 and the composite fuel cell module 210 is substantially the same. In this embodiment, the overall output power of the second fuel cell module 410 is an integral multiple of the overall output power of the first fuel cell module 110. Thus, the composite fuel cell module 210 can be designed to have the same overall output power as the second fuel cell module 410 by utilising the corresponding integer number of first fuel cell modules 110 as fuel cell sub-modules 310. For example, a first fuel cell module may have an overall output power of 25 kW, and a composite fuel cell module 210 may include four first fuel cell modules 110, thereby resulting in an overall output power of 100 kW. The composite fuel cell allows for an easier parts management due to its flexibility (for production and service purposes). The composite fuel cell also simplifies upgrading the system at a later stage, for example if higher power fuel cells become available, a user may replace the fuel cells with upgraded fuel cells. The composite fuel cell also allows for a flexible adjustment of the fuel cell system to the market requirements.

The composite fuel cell module 210 may further include a housing 224. The housing 224 of the composite fuel cell module 210 and a housing of the second fuel cell module 410 may each have substantially the same size. As illustrated in Figure 4, the fuel cell system 100 may be flexibly assembled of composite fuel cell modules 210 and second fuel cell modules 410. The fuel cell system 100 may be flexibly assembled of any combination of composite fuel cell modules 210 and/or first fuel cell modules 110 and/or second fuel cell modules 410.

The composite fuel cell module 210 may further include an intake air sub-manifold 170 for mechanically and fluidically connecting one of the intake air modules 141, 142, 143, and in particular the intake air interface 213, with each of the intake air sub-interfaces 313 of the plurality of fuel cell submodules 310. The composite fuel cell module 210 may further include an exhaust gas sub-manifold 160 for mechanically and fluidically connecting one of the exhaust gas modules 131, 132, 133, and in particular the exhaust gas air interface 212, with each of the exhaust gas sub-interfaces 312 of the plurality of fuel cell sub-modules 310.

The intake air sub-manifold 170 and the exhaust gas sub-manifold 160 may be structured in a manner corresponding to the intake air manifold 140 and the exhaust gas manifold 130. The exhaust gas submanifold 160 may include a plurality of exhaust gas submodules 161, 162, 163, such as one or more connecting exhaust gas sub-modules 161, one or more terminal exhaust gas sub-modules 163, and one or more outflow gas sub-modules 162 for connecting with the exhaust gas interface 212.

The intake air sub-manifold 170 may include a plurality of intake air submodules 171, 172, 173, such as one or more connecting intake air submodules 171, one or more terminal intake air sub-modules 173, and one or more intake air sub-modules 172 for connecting with the intake air interface 213.

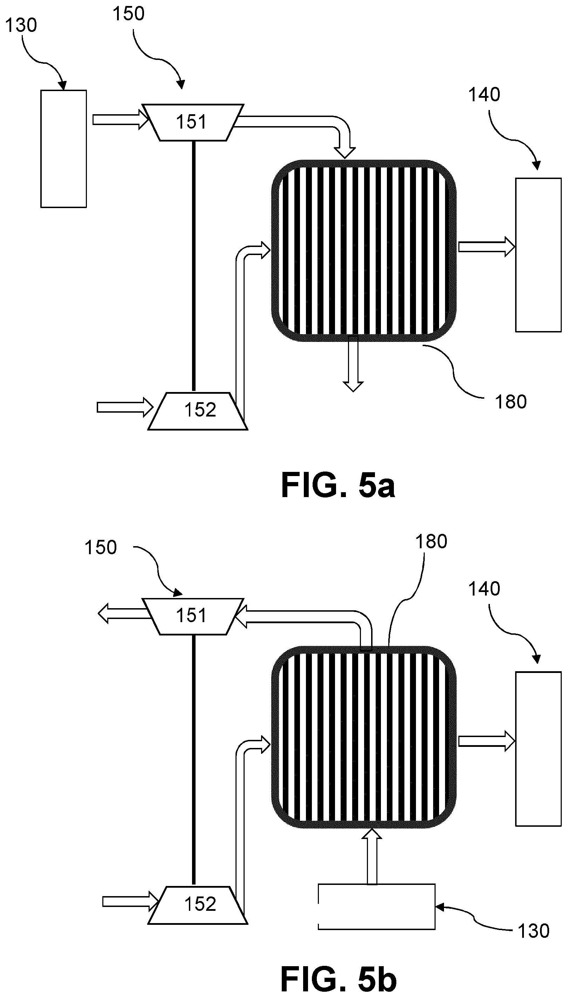

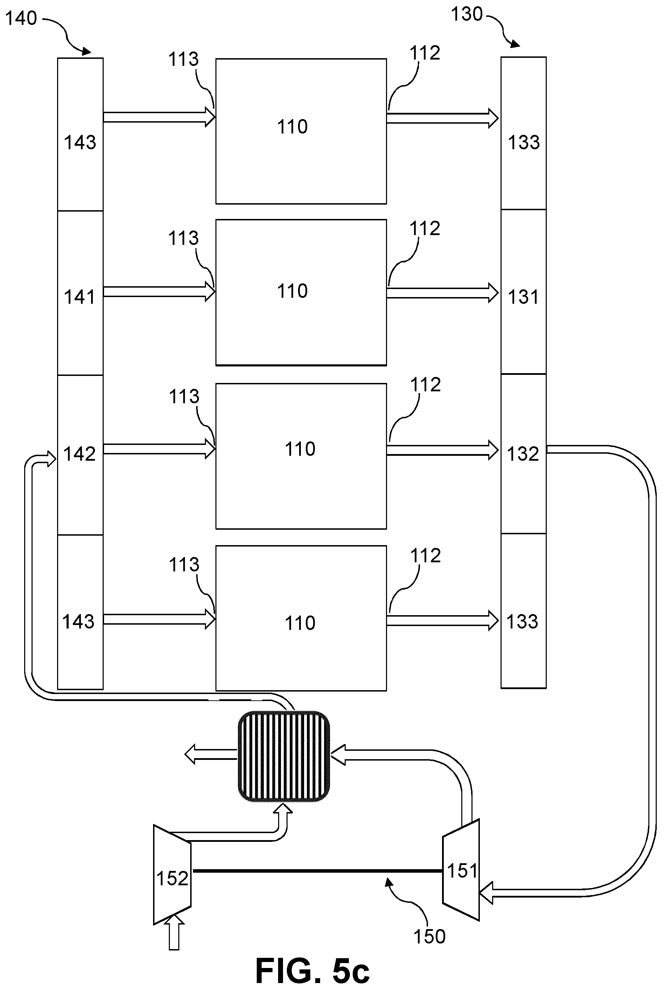

According to an embodiment, the modular fuel cell system 100 includes an external heat exchanger 180 configured for exchanging heat between intake air and exhaust gas. Examples of the external heat exchanger 180 are illustrated in Figures 5a to 5c. "External" is to be understood as external of the fuel cell modules or as not part of the fuel cell modules. As described further below, the fuel cell modules may include internal heat exchangers in some embodiments which exchange heat within parts of the same fuel cell module. The external heat exchanger on the other hand exchanges heats between parts of the modular fuel cell system 100, thereby preferably affecting all of the fuel cell modules. The external exchanger 180 is preferably configured to transfer thermal energy from or to exhaust gas at a position downstream of the exhaust gas manifold 130 and/or is configured to transfer energy from or to intake air at a position downstream of the turbocharging system 150. In particular embodiments, the external heat exchanger 180 may be used for pre-heating fuel and/or water. The external heat exchanger 180 advantageously only needs to be connected with the fuel cell system once, thus simplifying the design and reducing the time and costs for manufacturing the fuel cell system.

In one embodiment, the external heat exchanger 180 is configured to transfer heat from the intake air to the exhaust gas upstream of the turbine 151. This embodiment is particularly advantageous when the fuel cell 111 is a low temperature fuel cell, such as a proton exchange membrane fuel cell (PEMFC). In such a case, the exhaust gas exiting the fuel cell 111 may for example have a temperature of 80 °C. The charged intake air exiting the turbocharging system 150 may have a temperature in the range of 100-300 °C. Transferring heat from the intake air to the exhaust gas upstream of the turbine 151 allows for reducing the temperature of the intake air to a temperature suitable for operating the low temperature fuel cell, while increasing the thermal energy of the exhaust gas upstream of the turbine 151, which may be used for reducing the energy cost required to operate the turbocharging system 150. The external heat exchanger 180 may also be referred to as an aftercooler (for the charged intake air) in this embodiment, Figure 5b illustrates an embodiment in which heat is transferred from the intake air to the exhaust gas upstream of the turbine 151.

The external heat exchanger 180 may include a first portion or first fluid flow passage and a second portion or second fluid flow passage, wherein heat is exchanged between the first fluid flow passage and the second fluid flow passage. The first fluid flow passage is preferably configured for flow of (charged) intake air, the second fluid flow passage is preferably configured for flow of exhaust gas. The first portion of the external heat exchanger 180 is arranged downstream of the compressor 152, preferably downstream of the highest-pressure compressor of the turbocharging system, and upstream of the intake air manifold 140. The second portion of the external heat exchanger 180 is arranged downstream of the exhaust gas manifold 130 and upstream of the turbine 151, preferably upstream of the highest-pressure turbine of the turbocharging system. The first portion is preferably configured to transfer heat to the second portion.

In one embodiment, the external heat exchanger 180 is configured to transfer heat from the exhaust gas downstream of the turbine 151 to the intake air downstream of the compressor 152. This embodiment is particularly advantageous when the fuel cell 111 is a high temperature fuel cell, such as a solid oxide fuel cell (SOFC). In such a case, the exhaust gas exiting the fuel cell 111 may for example have a temperature of 800 °C. Even after exiting the turbocharging system, the exhaust gas may have a temperature of 350 °C or more, such as 600 °C. The charged intake air exiting the turbocharging system 150 may have a temperature in the range of 200-300 °C. Transferring heat from the exhaust gas downstream of the (lowest pressure) turbine 151 allows for increasing the temperature of the intake air to a temperature suitable for operating the high temperature fuel cell. The thermal energy is not extracted from the exhaust gas upstream of the turbocharging system such that the turbocharging system allows for generating energy, while only the excess heat of the exhaust gas exiting the turbocharging system is used, which otherwise might be wasted. Figure 5a illustrates an embodiment in which heat is transferred from the exhaust gas downstream of the turbine 151 to intake air downstream of the compressor 152.

The external heat exchanger 180 may include a first portion or first fluid flow passage and a second portion or second fluid flow passage, wherein heat is exchanged between the first fluid flow passage and the second fluid flow passage. The first fluid flow passage is preferably configured for flow of (charged) intake air, the second fluid flow passage is preferably configured for flow of exhaust gas. The first portion of the external heat exchanger 180 is arranged downstream of the compressor 152, preferably downstream of the highest-pressure compressor of the turbocharging system, and upstream of the intake air manifold 140. The second portion of the external heat exchanger 180 is arranged downstream of the turbine, preferably downstream of the lowest-pressure turbine of the turbocharging system. The second portion is preferably configured to transfer heat to the first portion.

The turbocharging system 150 may comprise the external heat exchanger 180. For example, the external heat exchanger 180 may be integrally formed with the turbocharging system 150.

Figure 2b shows additional optional components that can be included in the fuel cell module 110. Although Figure 2b shows several features, it is to be understood that each of these features can be included in the fuel cell module 110 independently of the other features shown. Moreover, each of the features shown for fuel cell module 110 may also be included in second fuel cell module 410 or composite fuel cell module 210. Including one or more of these components into the fuel cell modules allows for flexibly adapting the size of the fuel cell system and simplifies assembling of the fuel cell system.

The fuel cell module may include the exhaust gas line 125. The fuel cell module 110 may include at least one of an internal heat exchanger 122, an afterburner 121 and an oxidiser arranged within the exhaust gas line 125. In preferred embodiments, the fuel cell module 110 includes the internal heat exchanger 122, and the afterburner 121 or the oxidiser arranged within the exhaust gas line 125. The internal heat exchanger 122 and/or the afterburner 121 and/or the oxidiser may each be arranged in series within the exhaust gas line 125. The afterburner 121 or the oxidiser are preferably arranged upstream of the internal heat exchanger 122. The oxidiser may be one selected from a flameless oxidiser, a catalytic oxidiser and a thermal oxidiser. The afterburner and/or the oxidiser may be particularly beneficial in case of using a high temperature fuel cell, such as a solid oxide fuel cell (SOFC). In case of a low temperature fuel cell, such as a proton exchange membrane fuel cell (PEMFC), the afterburner and/or the oxidiser may also be advantageously employed to decompose hazardous gases and to recover a part of the corresponding chemical energy.

The internal heat exchanger may be provided in addition or as alternative to the external heat exchanger. The internal heat exchanger also allows for using the available thermal energy in an efficient manner, and thus improves the fuel cell system with regard to energy consumption and eco friendliness.

As described above, the internal heat exchanger 122 is configured to exchange heat within parts of the same fuel cell module 110. The internal heat exchanger may have a first portion or first fluid flow passage and a second portion or second fluid flow passage. The first fluid flow passage is preferably configured for flow of (charged) intake air, the second fluid flow passage is preferably configured for flow of exhaust gas. The second portion of the internal heat exchanger 122 is preferably arranged within the exhaust gas line 125. The first portion of the internal heat exchanger 122 is preferably arranged within an intake air line 127 of the fuel cell module 110. The intake air line 127 is illustrated for example in Figure 2b.

In one embodiment, the internal heat exchanger 122 is configured to transfer heat from the exhaust gas to the intake air within the fuel cell module 110. This embodiment is particularly advantageous when the fuel cell 111 is a high temperature fuel cell, such as a solid oxide fuel cell (SOFC). In this embodiment, the internal heat exchanger 122 may be referred to as an intake air heater. The first portion of the internal heat exchanger may be preferably arranged upstream of a cathode of the fuel cell 111.

In another embodiment, the internal heat exchanger 122 is configured to transfer heat from the intake air to the exhaust gas within the fuel cell module 110. Heat is transferred to the exhaust gas at a point upstream of the turbocharging system 150. This embodiment is particularly advantageous when the fuel cell 111 is a low temperature fuel cell, such as a such as a proton exchange membrane fuel cell (PEMFC).

In this embodiment, the internal heat exchanger 122 may be referred to as an exhaust gas heater. The first portion of the internal heat exchanger may be preferably arranged upstream of a cathode of the fuel cell 111 and/or upstream of a pre-reformer or a reformer (both are described in more detail further below).

According to an embodiment, the internal heat exchanger 122 and/or the external heat exchanger 180 may include a third portion or third fluid flow passage. The third fluid flow passage is preferably configured for flow of fuel or water. The internal heat exchanger 122 and/or the external heat exchanger 180 may be configured to transfer heat from the exhaust gas or the intake air to the water and/or the fuel. In other words, the first portion or the second portion of the internal heat exchanger 122 and/or the external heat exchanger 180 may be configured to transfer heat to the third portion. This embodiment is particularly advantageous when the fuel cell 111 is a high temperature fuel cell, such as a solid oxide fuel cell (SOFC), as high temperature fuel and/or high temperature water supplies are required for operating high temperature fuel cell module.

Additionally, or alternatively, the internal heat exchanger 122 may include a first portion or first fluid flow passage and a second portion or second fluid flow passage. The first fluid flow passage is preferably configured for flow of fuel or water, whereas the second fluid flow passage is preferably configured for exhaust gas. The internal heat exchanger 122 may be configured to transfer heat from the exhaust gas to the water and/or the fuel. In other words, the second portion of the internal heat exchanger 122 may be configured to transfer heat to the first portion.

The fuel cell module 110 may further include a fuel supply line connecting the fuel cell 111 with a fuel supply interface 115. Additionally, or alternatively, the fuel cell module 110 may further include one or more water supply lines connected to one or more water supply interfaces 114 of the fuel cell module 110. The fuel supply interface 115 and the water supply interface(s) 114 allow for the fuel cell module 110 to be designed as an entirely modular system to facilitate simple scaling of the fuel cell system 100, in particular the output power of the fuel cell system 100. The water may be liquid water or water vapour (water steam). In the latter case, a steam generator which is not part of the fuel cell module may supply water steam to the water supply interface 114. In case the fuel cell module 110 has two or more water supply interfaces 114, one of the water supply interfaces may be configured for supplying liquid water, and a second one of the water supply interfaces may be configured for supplying water steam. Alternatively, the fuel cell module 110 may not include a water supply interface 114, and water may be supplied by the fuel cell 111, such as by an anode recirculation blower described further below.

The fuel may include a hydrocarbon gas or a hydrocarbon gas mixture. In a preferred embodiment, the fuel may be selected from the group consisting of hydrogen, methane, Liquefied Natural Gas (LNG), ammonia, methanol and combinations thereof.

The fuel cell module 110 may further include at least one of a steam generator 128, a pre-reformer 126, a reformer and a shift reactor arranged within the fuel supply line. In addition, the water supply line may connect the water supply interface 114 with at least one of the steam generator 128, the pre-reformer 126, the reformer and the shift reactor, preferably the pre-reformer 126. Although the starting material (fuel) may be chemically reacted, and thus may correspond to a different gas mixture upstream and downstream of the pre-reformer 126, the reformer and the shift reactor, the entire line connecting the fuel supply interface 115 with the fuel cell is considered as fuel supply line.

The pre-reformer 126 and/or the reformer and/or the shift reactor may each be arranged in series within the exhaust gas line 125. The pre-reformer 126 is preferably arranged upstream of the reformer and the shift reactor. The reformer is preferably arranged upstream of the shift reactor. The steam generator 128 is preferably arranged downstream of the water supply interface 114 and upstream of the pre-reformer 126 and/or the reformer and/or the shift reactor and/or the fuel cell 111. Alternatively, the steam generator may be a component of the pre-reformer and/or the reformer and/or the water gas shift reactor.

The pre-reformer may be configured for producing methane, in particular by reaction of fuel, such as higher hydrocarbons. The reformer may be configured for producing hydrogen and carbon monoxide, in particular by reaction of fuel, such as a hydrocarbon, with water steam. The shift reactor may be configured to drive or cause a water-gas shift chemical reaction. The shift reactor may be configured to increase the amount of hydrogen compared to the hydrogen contained in the reactants. The steam generator 128 may be configured for converting liquid water into steam. The steam generator is preferably supplied with pre-heated water, such as water heated by the internal heat exchanger 122.

In case the fuel cell 111 is a high temperature fuel cell, such as a solid oxide fuel cell (SOFC), the fuel cell module 110 may typically not contain the reformer, and may optionally contain the pre-reformer 126, in particular if the fuel includes a hydrocarbon fuel. In case the fuel cell 111 is a low temperature fuel cell, such as a such as a proton exchange membrane fuel cell (PEMFC), the fuel cell module 110 may typically not contain the reformer if the fuel is hydrogen, but may contain the reformer and the shift reactor, in particular if the fuel includes methane or a hydrocarbon fuel, such as for oxidizing the remaining carbon monoxide.

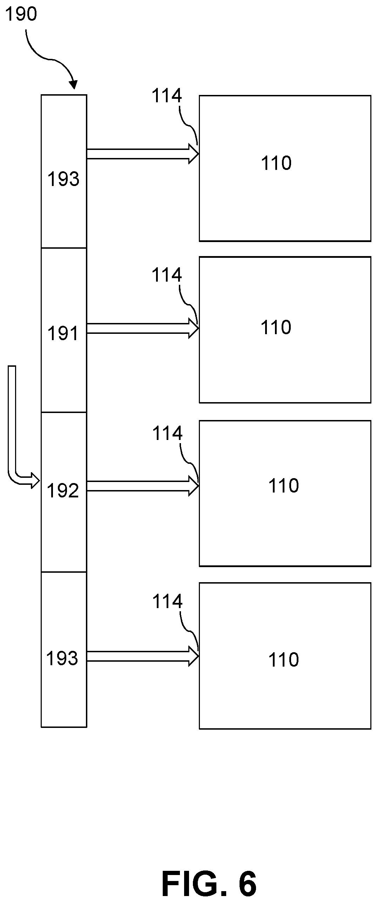

The modular fuel cell system 100 may further include a water supply manifold 190 fluidly and mechanically connected to each of the water supply interfaces 114 of the fuel cell modules 110, 410 and/or the composite fuel cell modules 210. An example of a water supply manifold is illustrated in Figure 6. The water supply manifold 190 includes a plurality of water supply modules 191, 192, 193. Each water supply module 191, 192, 193 is fluidly connected and mechanically releasably connected to at least an adjacent water supply module 191, 192, 193 and releasably connected to at least one water supply interface 114. The water supply manifold 190 is configured for supplying water to the steam generator 128, and/or the pre-reformer 126 and/or to the reformer and/or to the water gas shift reactor and/or to the fuel cell 111.

The water supply modules 191, 192, 193 are similarly structured and dimensioned. Typically, each water supply module is connected to the same number of water supply interfaces 114 of the fuel cell modules 110, preferably to one single water supply interface 114. The water supply manifold 190 and the exhaust gas manifold 130 or intake air manifold 140 may be structured in a corresponding manner, e.g. the water supply manifold 190 may include a plurality of water supply modules 191, 192, 193, such as one or more connecting water supply modules 191, one or more terminal water supply modules 193, and one or more inflow water modules 192 for connecting with a water source.

The modular fuel cell system 100 may further include a fuel supply manifold fluidly and mechanically connected to each of the fuel supply interfaces 115 of the fuel cell modules 110, 410 and/or the composite fuel cell modules 210. The fuel supply manifold includes a plurality of fuel supply modules. Each fuel supply module is fluidly connected and mechanically releasably connected to at least an adjacent fuel supply module and releasably connected to at least one fuel supply interface 115. The fuel supply manifold is configured for supplying fuel to the pre-refonner 126 and/or to the reformer and/or to the water gas shift reactor and/or the fuel cell 111.

The fuel supply modules are similarly structured and dimensioned. Typically, each fuel module is connected to the same number of fuel interfaces 115 of the fuel cell modules 110, preferably to one single fuel supply interface 115. The fuel supply manifold and the exhaust gas manifold 130 or intake air manifold 140 may be structured in a corresponding manner, e.g. the fuel supply manifold may include a plurality of fuel supply modules, such as one or more connecting fuel supply modules, one or more terminal fuel supply modules, and one or more inflow fuel modules for connecting with a fuel source.

The fuel supply manifold and the water supply manifold 190 facilitate simple scaling of the fuel cell system 100, in particular the output power of the fuel cell system 100, with as few types of components as possible.

According to an embodiment, the modular fuel cell system 100 may include at least one of an external steam generator and/or an external pre-reformer, an external reformer and an external shift reactor connected to the fuel supply manifold and/or the water supply manifold 190. As described above, "external" is to be understood as external of the fuel cell module or as not part of the fuel cell module. This embodiment allows for having one single steam generator and/or one single pre-reformer, and/or one single reformer and/or one single shift reactor for the entire fuel cell system 100. In this embodiment, the water supply line and the water supply interface 114 of the fuel cell modules may be omitted. Instead of the water supply manifold, a (single) water supply line may connect the external steam generator and/or the external pre-reformer and/or the external reformer and/or the external shift reactor with an external water source. The at least one of the external pre-reformer, the external reformer and the external shift reactor may be arranged upstream of the fuel supply interface 115. The modular fuel cell system having at least one of the external steam generator, the external pre-reformer, the external reformer and the external shift reactor allows for a simple design with a reduced number of components. Moreover, the number of interfaces for the fuel cell modules can be reduced, which further facilitates flexibly adapting the scale of the fuel cell system.

The modular fuel cell system 100 may include a plurality of external steam generators and/or external pre-reformers and/or external reformers and/or external shift reactors. The modular fuel cell system 100 may include at least one of the external pre-reformer, the external reformer and the external shift reactor for each fuel supply module. In other words, at least one of the external pre-reformer, the external reformer and the external shift reactor may be arranged within each fuel supply module.

According to an embodiment, the turbocharging system 150 may include at least two turbochargers.

In one illustrative embodiment, the at least two turbochargers may be connected in parallel with the intake air manifold 140 and the exhaust gas manifold 130. Each of the turbochargers includes a turbine and a compressor. One or more of the at least two turbochargers may be a shafted turbocharger, wherein the compressor 152 and the turbine 151 are mechanically coupled through a shaft; or alternatively, may include a separate electric compressor and a separate electric turbine. Each of the at least two turbochargers may include an external heat exchanger 180 as described herein. The flow path of the intake air upstream of the intake air manifold 140 and/or the flow path of the exhaust gas downstream of the exhaust gas manifold 130 may be split up (bifurcated) in two or more parallel flow paths, with each of the turbochargers being in fluid connection with one of the parallel flow paths.

In another illustrative embodiment, the at least two turbochargers may be connected in series with the intake air manifold and the exhaust gas manifold. One of the turbochargers may be referred to as low-pressure turbocharger and one of the turbochargers may be referred to as high-pressure turbocharger. The low-pressure turbocharger and/or the high-pressure turbocharger may be electric turbochargers, in particular include a separate electric compressor and a separate electric turbine. Typically, the turbocharging system having at least two turbochargers connected in series may have only one external heat exchanger 180 as described herein.

Additionally, or alternatively, the turbocharging system may include an intercooler arranged between the low-pressure turbocharger and the high-pressure turbocharger, or in case of more than two turbochargers, the turbocharging system may include an intercooler arranged between each pair of adjacent turbochargers. The intercooler may include a first portion or first fluid flow passage and a second portion or second fluid flow passage.

In one exemplary embodiment, the first fluid flow passage is preferably configured for flow of fuel or water, whereas the second fluid flow passage is preferably configured for charged intake air. The second fluid flow passage is preferably arranged between the low-pressure compressor and the high-pressure compressor, or between an adjacent pair of compressors. The intercooler may be configured to transfer heat from the charged intake air to the water or the fuel. In other words, the second portion of the intercooler may be configured to transfer heat to the first portion. Advantageously, the intercooler allows for using the thermal energy of the charged intake air to heat the water and/or fuel, which needs to be heated for operating the fuel cell module. This embodiment may be particularly advantageous in case the fuel cell is a high temperature fuel cell, in which the exhaust gas originating from the high-pressure turbine may have a temperature above the temperature of the intake air originating from the low-pressure compressor and therefore cannot be used for cooling the intake air via the intercooler. The intercooler therefore allows for using the thermal energy in an alternative manner.

In one exemplary embodiment, the first fluid flow passage is preferably configured for exhaust gas, whereas the second fluid flow passage is preferably configured for charged intake air. The first fluid flow passage is preferably arranged between the high-pressure turbine and the low-pressure turbine, or between an adjacent pair of turbines. The second fluid flow passage is preferably arranged between the low-pressure compressor and the high-pressure compressor, or between an adjacent pair of compressors. The intercooler may be configured to transfer heat from the charged intake air to the exhaust gas. In other words, the second portion of the intercooler may be configured to transfer heat to the first portion. Advantageously, the intercooler allows for using the thermal energy of the charged intake air to heat the exhaust gas, which increases power and efficiency in the subsequent turbine stage. This embodiment may be particularly advantageous in case the fuel cell is a low temperature fuel cell, in which the exhaust gas originating from the high-pressure turbine may have a temperature below the temperature of the intake air originating from the low-pressure compressor.

The aforementioned illustrative embodiments may also be combined by having two or more parallel turbocharging sub-systems each having two or more turbochargers arranged in series. The aforementioned illustrative embodiments may also be combined by having two or more parallel turbocharging sub-systems with one or more of the turbocharging sub-systems including only one turbocharger and one or more of the turbocharging sub-systems including two or more turbochargers arranged in series.

Typically, each parallel turbocharging sub-system may have only one external heat exchanger 180 and/or an intercooler arranged between the low-pressure turbocharger and the high-pressure turbocharger, or between each pair of adjacent turbochargers, as described above.

The external heat exchanger 180 may be integrally formed with the lowest pressure turbocharger, in particular in case of using a high temperature fuel cell, such as a solid oxide fuel cell (SOFC). Heat may then be transferred from a position downstream of the lowest pressure turbine(s) to a position after the highest pressure stage compressor(s), upstream the fuel cell(s).

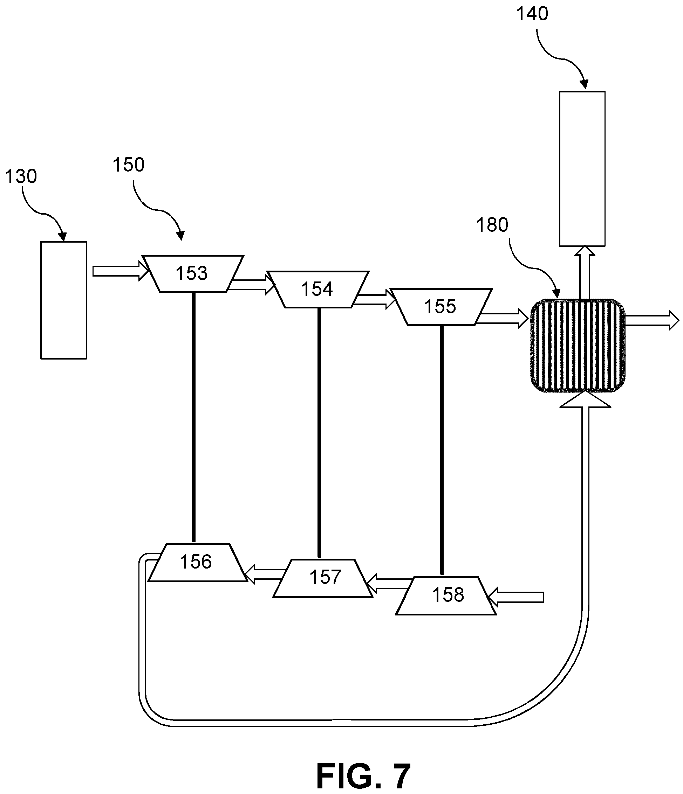

Figure 7 shows a fuel cell system having a turbocharging system with three turbochargers arranged in series. The turbocharging system includes a high-pressure turbine 153, an intermediate-pressure turbine 154, a low-pressure turbine 155, a high-pressure compressor 156, an intermediate-pressure compressor 157 and a low-pressure compressor 158. The fuel cell system further includes the external heat exchanger. The first fluid flow passage is configured for flow of (charged) intake air, the second fluid flow passage is configured for flow of exhaust gas. The first portion of the external heat exchanger 180 is arranged downstream of the highest-pressure compressor 156 of the turbocharging system, and upstream of the intake air manifold 140. The second portion of the external heat exchanger 180 is arranged downstream of the lowest-pressure turbine 155 of the turbocharging system. The second portion is preferably configured to transfer heat to the first portion. Preferably, the turbocharging system may include intercoolers between each pair of compressors, i.e. one intercooler between the high-pressure compressor 156, and the intermediate-pressure compressor 157, and one intercooler between the intermediate-pressure compressor 157 and the low-pressure compressor 158. The embodiment shown in Figure 7 is particularly advantageous when the fuel cell 111 is a high temperature fuel cell.

The fuel cell system may include an external heat exchanger 180 for each of the turbochargers. Each external heat exchanger 180 may be integrally formed with one of the turbochargers, in particular in case of using a low temperature fuel cell. At each stage, heat may go from after the compressor to upstream (before) the corresponding turbine.

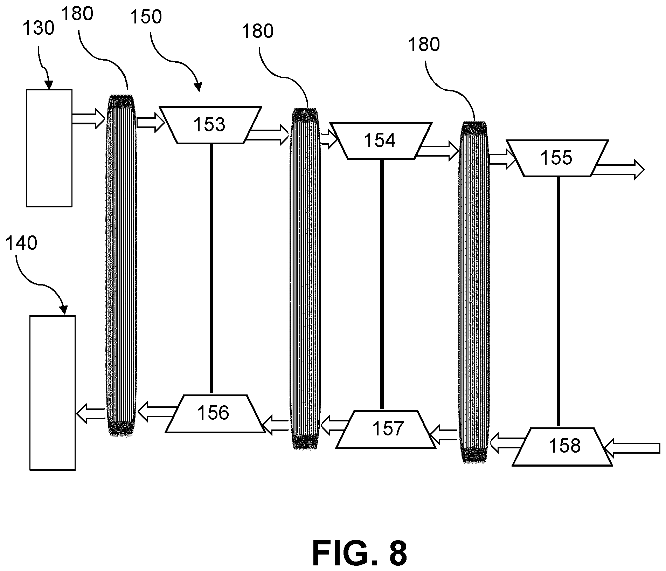

Figure 8 shows a fuel cell system having a turbocharging system with three turbochargers arranged in series. The turbocharging system includes a high-pressure turbine 153, an intermediate-pressure turbine 154, a low-pressure turbine 155, a high-pressure compressor 156, an intermediate-pressure compressor 157 and a low-pressure compressor 158. The fuel cell system includes an external heat exchanger 180 for each of the turbochargers. At each stage, heat goes from after the compressor to upstream (before) the corresponding turbine. The embodiment shown in Figure 8 is particularly advantageous when the fuel cell 111 is a low temperature fuel cell.

The fuel cell module 110 may also an internal electric connection system, and an electric connection interface. The modular fuel cell system may include a control system for controlling operation of the fuel cell system and, in particular the fuel cell modules, and an external electric connection system. The external electric connection system may be connected to the control system, and to the electric connection interfaces of each of the fuel cell modules 110.

The modular fuel cell system may include a cooling circuit, and the fuel cell module 110 may further include one or more cooling circuit interface(s), such as an inlet and an outlet connection. The cooling fluid may be water, air or any other suitable coolant fluid.

The fuel cell module 110 may further include an anode recirculation blower 123, an example of which is illustrated in Figure 2b. The anode recirculation blower 123 may be configured to convey hydrogen that has not been consumed by the fuel cell 111 and/or water exiting from the anode of the fuel cell 111 back to the pre-reformer and/or the reformer and/or the water gas shift reactor and/or a fuel inlet (for example a hydrogen infeed) of the fuel cell.

The fuel cell system of the present disclosure may be utilised for a range of different applications with vastly differing power consumptions. For example, the fuel cell system may be used for automotive applications, as well as combined heat and power (CHP) applications, but also large-scale applications requiring MW output powers, wherein drastically reduced costs can be expected.

While the foregoing is directed to embodiments, other and further embodiments may be devised without departing from the basic scope, and the scope is determined by the claims that follow.

### REFERENCE NUMERALS

- 100: modular fuel cell system
- 110, 410: fuel cell modules
- 111: fuel cell
- 112, 412: exhaust gas interface
- 113, 413: Intake air interface
- 114: water supply interface
- 115: fuel supply interface
- 121: afterburner
- 122: internal heat exchanger
- 123: anode recirculation blower
- 124, 224: housing
- 125: exhaust gas line
- 126: pre-reformer
- 127: intake air line
- 130: exhaust gas manifold
- 131, 132, 133: exhaust gas module
- 140: intake air manifold
- 141, 142, 143: intake air module
- 150: turbocharging system
- 151: turbine
- 152: compressor
- 153: high-pressure turbine
- 154: intermediate-pressure turbine
- 155: low-pressure turbine
- 156: high-pressure compressor
- 157: intermediate-pressure compressor
- 158: low-pressure compressor
- 160: exhaust gas submanifold
- 161, 162, 163: exhaust gas submodule
- 170: intake air submanifold
- 171, 172, 173: intake air submodule
- 180: external heat exchanger
- 190: water supply manifold
- 191, 192, 193: water supply module
- 210: composite fuel cell module
- 212: exhaust gas interface
- 213: Intake air interface
- 310: fuel cell sub-module
- 312: exhaust gas sub-interface
- 313: intake air sub-interface

## Claims

1. A modular fuel cell system (100) comprising:
- a plurality of fuel cell modules (110, 410), each fuel cell module (110, 410) comprising a fuel cell (111), an intake air interface (113, 413) for providing intake air to the fuel cell module (110, 410), and an exhaust gas interface (112, 412) for conducting away exhaust gas from the fuel cell module (110, 410);
- an intake air manifold (140) connected to each of the intake air interfaces (113) of the fuel cell modules (110, 410), the intake air manifold (140) containing a plurality of intake air modules (141, 142, 143), wherein each intake air module (141, 142, 143) is releasably connected to at least one adjacent intake air module (141, 142, 143) and connected to at least one of the intake air interfaces (113) for providing intake air from the intake air manifold (140) to the at least one of the intake air interfaces (113);
- an exhaust gas manifold (130) connected to each of the exhaust gas interfaces (112) of the fuel cell modules (110, 410), the exhaust gas manifold (130) containing a plurality of exhaust gas modules (131, 132, 133), wherein each exhaust gas module (131, 132, 133) is releasably connected to at least one adjacent exhaust gas module (131, 132, 133) and connected to at least one of the exhaust gas interfaces (112) for receiving exhaust gas from at least one of the exhaust gas interfaces (112);
- a turbocharging system (150) comprising at least one turbocharger having a compressor (152) and a turbine (151), wherein the turbine (151) is in fluid connection with the exhaust gas manifold (130) for receiving the exhaust gas from the exhaust gas manifold (130), and the compressor (152) is in fluid connection with the intake air manifold (140) for providing charged intake air to the intake air manifold (140).

2. The modular fuel cell system of claim 1, wherein the plurality of fuel cell modules (110, 410) include a first fuel cell module (110) and a second fuel cell module (410), wherein the overall output power of the second fuel cell module (410) is larger than the overall output power of the first fuel cell module (110); preferably wherein the overall output power of the second fuel cell module (410) is at least twice the overall output power of the first fuel cell module (110); and more preferably wherein the overall output power of the second fuel cell module (410) is an integral multiple of the overall output power of the first type of fuel cell module (110).

3. The modular fuel cell system of any of claims 1 or 2, further including a composite fuel cell module (210) comprising a plurality of fuel cell sub-modules (310), each fuel cell sub-module (310) comprising a fuel cell, an intake air sub-interface (313) for providing intake air to the fuel cell sub-module (310), and an exhaust gas sub-interface (312) for conducting away exhaust gas from the fuel cell sub-module (310), preferably wherein the fuel cell sub-module (310) is the first fuel cell module (110).

4. The modular fuel cell system of claim 3, wherein the overall output power of the second fuel cell module (410) and the composite fuel cell module (210) is substantially the same; and/or wherein the second fuel cell module (410) and the composite fuel cell module (210) each include a housing (224) having substantially the same size.

5. The modular fuel cell system of any of claims 3 or 4, wherein the composite fuel cell module (210) further includes an intake air submanifold (170) for connecting one of the intake air modules (141, 142, 143) with each of the intake air sub-interfaces (313) of the plurality of fuel cell sub-modules (310); and an exhaust gas sub-manifold (160) for connecting one of the exhaust gas modules (131, 132, 133) with each of the exhaust gas sub-interfaces (312) of the plurality of fuel cell sub-modules (310).

6. The modular fuel cell system of any preceding claim, further including an external heat exchanger (180) configured for exchanging heat between intake air and exhaust gas.

7. The modular fuel cell system of claim 6, wherein the external heat exchanger (180) is configured to transfer heat from the intake air to the exhaust gas upstream of the turbine (151).

8. The modular fuel cell system of any of claims 6 or 7, wherein a first portion of the external heat exchanger (180) is arranged downstream of the compressor (152) and upstream of the intake air manifold (140), and a second portion of the external heat exchanger (180) is arranged downstream of the exhaust gas manifold (130) and upstream of the turbine (151), preferably wherein the first portion is configured to transfer heat to the second portion.

9. The modular fuel cell system of claim 6, wherein the external heat exchanger (180) is configured to transfer heat from the exhaust gas downstream of the turbine (151) to the intake air downstream of the compressor (152).

10. The modular fuel cell system of any of claims 6 or 9, wherein a first portion of the external heat exchanger (180) is arranged downstream of the compressor (152) and upstream of the intake air manifold (140), and a second portion of the external heat exchanger (180) is arranged downstream of the turbine (151), preferably wherein the second portion is configured to transfer heat to the first portion; and optionally wherein the turbocharging system (150) comprises the external heat exchanger (180).

11. The modular fuel cell system of any preceding claim, including at least two turbochargers connected in parallel with the intake air manifold (140) and the exhaust gas manifold (130).

12. The modular fuel cell system of any preceding claim, wherein each of the plurality of fuel cell modules (110) further includes an exhaust gas line (125) connecting the fuel cell (111) with the exhaust gas interface (112), and further including at least one of an internal heat exchanger (122), an afterburner (121) and an oxidiser arranged and combinations thereof within the exhaust gas line (125); optionally including the internal heat exchanger (122) and the afterburner (121) arranged in series within the exhaust gas line (125), the afterburner (121) being preferably upstream of the internal heat exchanger (122).

13. The modular fuel cell system of any preceding claim, wherein each of the plurality of fuel cell modules (110) further includes a fuel supply line connecting the fuel cell (111) with a fuel supply interface (115), and further including at least one of a steam generator 128, a pre-reformer (126), a reformer and a shift reactor arranged within the fuel supply line.

14. The modular fuel cell system of any preceding claim, wherein each of the plurality of fuel cell modules (110, 410) and/or each of the composite fuel cell modules (210) includes a water supply interface (114), the fuel cell system (100) further comprising:
- a water supply manifold (190) connected to each of the water supply interfaces (114) of the fuel cell modules (110, 410) and/or the composite fuel cell modules (210), the water supply manifold (190) containing a plurality of water supply modules (191, 192, 193), wherein each water supply module (191, 192, 193) is releasably connected to at least an adjacent water supply module (191, 192, 193) and connected to at least one water supply interface (114).

15. The modular fuel cell system of any preceding claim, wherein each of the plurality of fuel cell modules (110, 410) and/or each of the composite fuel cell modules (210) includes a fuel supply interface (115), the fuel cell system (100) further comprising:
- a fuel supply manifold connected to each of the fuel supply interfaces (115) of the fuel cell modules (110, 410) and/or each of the composite fuel cell modules (210), the fuel supply manifold containing a plurality of fuel supply modules, wherein each fuel supply module is releasably connected to at least an adjacent fuel supply module and connected to at least one fuel supply interface (115).

16. The modular fuel cell system of claim 14 or 15, further including at least one of an external steam generator, an external pre-reformer, an external reformer and an external shift reactor connected to the fuel supply manifold and/or the water supply manifold (190).

## Patentansprüche

1. Modulares Brennstoffzellensystem (100), umfassend:
- eine Vielzahl von Brennstoffzellenmodulen (110, 410), wobei jedes Brennstoffzellenmodul (110, 410) eine Brennstoffzelle (111), eine Ansaugluftschnittstelle (113, 413) zur Zufuhr von Ansaugluft zum Brennstoffzellenmodul (110, 410) und eine Abgasschnittstelle (112, 412) zum Ableiten von Abgas aus dem Brennstoffzellenmodul (110, 410) umfasst;
einen Ansaugluftverteiler (140), der mit jeder der Ansaugluftschnittstellen (113) der Brennstoffzellenmodule (110, 410) verbunden ist, wobei der Ansaugluftverteiler (140) eine Vielzahl von Ansaugluftmodulen (141, 142, 143) enthält, wobei jedes Ansaugluftmodul (141, 142, 143) lösbar mit mindestens einem benachbarten Ansaugluftmodul (141, 142, 143) verbunden und mit mindestens einer der Ansaugluftschnittstellen (113) verbunden ist, um Ansaugluft vom Ansaugluftverteiler (140) zu der mindestens einen Ansaugluftschnittstelle (113) zu leiten;
- einen Abgasverteiler (130), der mit jeder der Abgasschnittstellen (112) der Brennstoffzellenmodule (110, 410) verbunden ist, wobei der Abgasverteiler (130) eine Vielzahl von Abgasmodulen (131, 132, 133) enthält, wobei jedes Abgasmodul (131, 132, 133) lösbar mit mindestens einem benachbarten Abgasmodul (131, 132, 133) verbunden und mit mindestens einer der Abgasschnittstellen (112) verbunden ist, um Abgas von der mindestens einen Abgasschnittstelle (112) aufzunehmen;
- ein Turboladersystem (150), das mindestens einen Turbolader mit einem Verdichter (152) und einer Turbine (151) umfasst, wobei die Turbine (151) in Fluidverbindung mit dem Abgasverteiler (130) steht, um das Abgas vom Abgasverteiler (130) zu empfangen, und der Verdichter (152) in Fluidverbindung mit dem Ansaugluftverteiler (140) steht, um verdichtete Ansaugluft zum Ansaugluftverteiler (140) zu fördern.

2. Modulares Brennstoffzellensystem nach Anspruch 1, wobei die Vielzahl von Brennstoffzellenmodulen (110, 410) ein erstes Brennstoffzellenmodul (110) und ein zweites Brennstoffzellenmodul (410) umfasst, wobei die Gesamtausgangsleistung des zweiten Brennstoffzellenmoduls (410) größer als die Gesamtausgangsleistung des ersten Brennstoffzellenmoduls (110) ist; bevorzugt wobei die Gesamtausgangsleistung des zweiten Brennstoffzellenmoduls (410) mindestens doppelt so groß wie die Gesamtausgangsleistung des ersten Brennstoffzellenmoduls (110) ist; und weiter bevorzugt wobei die Gesamtausgangsleistung des zweiten Brennstoffzellenmoduls (410) ein ganzzahliges Vielfaches der Gesamtausgangsleistung des Brennstoffzellenmoduls des ersten Typs (110) ist.

3. Modulares Brennstoffzellensystem nach einem der Ansprüche 1 oder 2, ferner umfassend ein Verbundbrennstoffzellenmodul (210), das eine Vielzahl von Brennstoffzellenuntermodulen (310) umfasst, wobei jedes Brennstoffzellenuntermodul (310) eine Brennstoffzelle, eine Ansaugluft-Unterschnittstelle (313) zur Zufuhr von Ansaugluft zum Brennstoffzellenuntermodul (310) und eine Abgas-Unterschnittstelle (312) zur Ableitung von Abgas aus dem Brennstoffzellenuntermodul (310) umfasst, bevorzugt wobei das Brennstoffzellenuntermodul (310) das erste Brennstoffzellenmodul (110) ist.

4. Modulares Brennstoffzellensystem nach Anspruch 3, wobei die Gesamtausgangsleistung des zweiten Brennstoffzellenmoduls (410) und des Verbundbrennstoffzellenmoduls (210) im Wesentlichen dieselbe ist; und/oder wobei das zweite Brennstoffzellenmodul (410) und das Verbundbrennstoffzellenmodul (210) jeweils ein Gehäuse (224) mit im Wesentlichen derselben Größe aufweisen.

5. Modulares Brennstoffzellensystem nach einem der Ansprüche 3 oder 4, wobei das Verbundbrennstoffzellenmodul (210) ferner einen Ansaugluftunterverteiler (170) zum Verbinden eines der Ansaugluftmodule (141, 142, 143) mit jeder der Ansaugluft-Unterschnittstellen (313) der Vielzahl von Brennstoffzellenuntermodulen (310) umfasst; und einen Abgasunterverteiler (160) zum Verbinden eines der Abgasmodule (131, 132, 133) mit jeder der Abgasunterschnittstellen (312) der Vielzahl von Brennstoffzellenuntermodulen (310).

6. Modulares Brennstoffzellensystem nach einem der vorhergehenden Ansprüche, ferner umfassend einen externen Wärmetauscher (180), der dazu ausgelegt ist, Wärme zwischen Ansaugluft und Abgas auszutauschen.

7. Modulares Brennstoffzellensystem nach Anspruch 6, wobei der externe Wärmetauscher (180) dazu ausgelegt ist, Wärme von der Ansaugluft an das Abgas stromaufwärts der Turbine (151) zu übertragen.

8. Modulares Brennstoffzellensystem nach einem der Ansprüche 6 oder 7, wobei ein erster Abschnitt des externen Wärmetauschers (180) stromabwärts des Verdichters (152) und stromaufwärts des Ansaugluftverteilers (140) angeordnet ist und ein zweiter Abschnitt des externen Wärmetauschers (180) stromabwärts des Abgasverteilers (130) und stromaufwärts der Turbine (151) angeordnet ist, bevorzugt wobei der erste Abschnitt dazu ausgelegt ist, Wärme an den zweiten Abschnitt zu übertragen.

9. Modulares Brennstoffzellensystem nach Anspruch 6, wobei der externe Wärmetauscher (180) dazu ausgelegt ist, Wärme vom Abgas stromabwärts der Turbine (151) an die Ansaugluft stromabwärts des Verdichters (152) zu übertragen.

10. Modulares Brennstoffzellensystem nach einem der Ansprüche 6 oder 9, wobei ein erster Abschnitt des externen Wärmetauschers (180) stromabwärts des Verdichters (152) und stromaufwärts des Ansaugluftverteilers (140) angeordnet ist und ein zweiter Abschnitt des externen Wärmetauschers (180) stromabwärts der Turbine (151) angeordnet ist, bevorzugt wobei der zweite Abschnitt dazu ausgelegt ist, Wärme an den ersten Abschnitt zu übertragen; und optional wobei das Turboladersystem (150) den externen Wärmetauscher (180) umfasst.

11. Modulares Brennstoffzellensystem nach einem der vorhergehenden Ansprüche, umfassend mindestens zwei parallel mit dem Ansaugluftverteiler (140) und dem Abgasverteiler (130) verbundene Turbolader.

12. Modulares Brennstoffzellensystem nach einem der vorhergehenden Ansprüche, wobei jedes der Vielzahl von Brennstoffzellenmodulen (110) ferner eine Abgasleitung (125) umfasst, die die Brennstoffzelle (111) mit der Abgasschnittstelle (112) verbindet, und ferner umfassend zumindest einen internen Wärmetauscher (122), einen Nachbrenner (121) und einen Oxidator sowie Kombinationen davon, die innerhalb der Abgasleitung (125) angeordnet sind; optional umfassend den internen Wärmetauscher (122) und den Nachbrenner (121), die in Reihe innerhalb der Abgasleitung (125) angeordnet sind, wobei der Nachbrenner (121) bevorzugt stromaufwärts des internen Wärmetauschers (122) liegt.

13. Modulares Brennstoffzellensystem nach einem der vorhergehenden Ansprüche, wobei jedes der Vielzahl von Brennstoffzellenmodulen (110) ferner eine Brennstoffzufuhrleitung umfasst, die die Brennstoffzelle (111) mit einer Brennstoffversorgungsschnittstelle (115) verbindet, und ferner umfassend zumindest einen Dampferzeuger 128, einen Vorreformer (126), einen Reformer und einen Shift-Reaktor, die innerhalb der Brennstoffzufuhrleitung angeordnet sind.

14. Modulares Brennstoffzellensystem nach einem der vorhergehenden Ansprüche, wobei jedes der Vielzahl von Brennstoffzellenmodulen (110, 410) und/oder jedes der Verbundbrennstoffzellenmodule (210) eine Wasserversorgungsschnittstelle (114) umfasst, wobei das Brennstoffzellensystem (100) ferner umfasst:
einen Wasserversorgungsverteiler (190), der mit jeder der Wasserversorgungsschnittstellen (114) der Brennstoffzellenmodule (110, 410) und/oder der Verbundbrennstoffzellenmodule (210) verbunden ist, wobei der Wasserversorgungsverteiler (190) eine Vielzahl von Wasserversorgungsmodulen (191, 192, 193) enthält, wobei jedes Wasserversorgungsmodul (191, 192, 193) lösbar mit mindestens einem benachbarten Wasserversorgungsmodul (191, 192, 193) verbunden und mit mindestens einer Wasserversorgungsschnittstelle (114) verbunden ist.

15. Modulares Brennstoffzellensystem nach einem der vorhergehenden Ansprüche, wobei jedes der Vielzahl von Brennstoffzellenmodulen (110, 410) und/oder jedes der Verbundbrennstoffzellenmodule (210) eine Brennstoffversorgungsschnittstelle (115) umfasst, wobei das Brennstoffzellensystem (100) ferner umfasst:
- einen Brennstoffversorgungsverteiler, der mit jeder der Brennstoffversorgungsschnittstellen (115) der Brennstoffzellenmodule (110, 410) und/oder jedem der Verbundbrennstoffzellenmodule (210) verbunden ist, wobei der Brennstoffversorgungsverteiler eine Vielzahl von Brennstoffversorgungsmodulen enthält, wobei jedes Brennstoffversorgungsmodul lösbar mit mindestens einem benachbarten Brennstoffversorgungsmodul verbunden und mit mindestens einer Brennstoffversorgungsschnittstelle (115) verbunden ist.

16. Modulares Brennstoffzellensystem nach Anspruch 14 oder 15, ferner umfassend zumindest einen externen Dampferzeuger, einen externen Vorreformer, einen externen Reformer und einen externen Shift-Reaktor, die mit dem Brennstoffversorgungsverteiler und/oder dem Wasserversorgungsverteiler (190) verbunden sind.

## Revendications

1. Système de pile à combustible modulaire (100), comprenant :
- une pluralité de modules de pile à combustible (110, 410), chaque module de pile à combustible (110, 410) comprenant une pile à combustible (111), une interface d'air d'admission (113, 413) destinée à fournir de l'air d'admission au module de pile à combustible (110, 410), et une interface de gaz d'échappement (112, 412) destinée à éloigner un gaz d'échappement du module de pile à combustible (110, 410) ;
- un collecteur d'air d'admission (140) raccordé à chacune des interfaces d'air d'admission (113) des modules de pile à combustible (110, 410), le collecteur d'air d'admission (140) contenant une pluralité de modules d'air d'admission (141, 142, 143), dans lequel chaque module d'air d'admission (141, 142, 143) est raccordé de façon libérable à au moins un module d'air d'admission adjacent (141, 142, 143) et raccordé à au moins une des interfaces d'air d'admission (113) afin de fournir de l'air d'admission du collecteur d'air d'admission (140) à l'au moins une des interfaces d'air d'admission (113) ;
- un collecteur de gaz d'échappement (130) raccordé à chacune des interfaces de gaz d'échappement (112) des modules de pile à combustible (110, 410), le collecteur de gaz d'échappement (130) contenant une pluralité de modules de gaz d'échappement (131, 132, 133), dans lequel chaque module de gaz d'échappement (131, 132, 133) est raccordé de façon libérable à au moins un module de gaz d'échappement adjacent (131, 132, 133) et raccordé à au moins une des interfaces de gaz d'échappement (112) afin de recevoir un gaz d'échappement en provenance d'au moins une des interfaces de gaz d'échappement (112) ;
- un système de suralimentation (150) comprenant au moins un turbocompresseur de suralimentation ayant un compresseur (152) et une turbine (151), dans lequel la turbine (151) est en raccordement fluidique avec le collecteur de gaz d'échappement (130) afin de recevoir le gaz d'échappement en provenance du collecteur de gaz d'échappement (130), et le compresseur (152) est en raccordement fluidique avec le collecteur d'air d'admission (140) afin de fournir de l'air d'admission chargé au collecteur d'air d'admission (140).

2. Système de pile à combustible modulaire de la revendication 1, dans lequel la pluralité de modules de pile à combustible (110, 410) incluent un premier module de pile à combustible (110) et un second module de pile à combustible (410), dans lequel la puissance de sortie totale du second module de pile à combustible (410) est supérieure à la puissance de sortie totale du premier module de pile à combustible (110) ; de préférence dans lequel la puissance de sortie totale du second module de pile à combustible (410) est au moins deux fois la puissance de sortie totale du premier module de pile à combustible (110) ; et mieux encore dans lequel la puissance de sortie totale du second module de pile à combustible (410) est un multiple intégral de la puissance de sortie totale du premier type de module de pile à combustible (110).

3. Système de pile à combustible modulaire de quelconques des revendications 1 ou 2, incluant en outre un module de pile à combustible composite (210) comprenant une pluralité de sous-modules de pile à combustible (310), chaque sous-module de pile à combustible (310) comprenant une pile à combustible, une sous-interface d'air d'admission (313) destinée à fournir de l'air d'admission au sous-module de pile à combustible (310), et une sous-interface de gaz d'échappement (312) destinée à éloigner un gaz d'échappement du sous-module de pile à combustible (310), de préférence dans lequel le sous-module de pile à combustible (310) est le premier module de pile à combustible (110).

4. Système de pile à combustible modulaire de la revendication 3, dans lequel la puissance de sortie totale du second module de pile à combustible (410) et du module de pile à combustible composite (210) est sensiblement la même ; et/ou dans lequel le second module de pile à combustible (410) et le module de pile à combustible composite (210) incluent chacun un logement (224) ayant sensiblement la même taille.

5. Système de pile à combustible modulaire de quelconques des revendications 3 ou 4, dans lequel le module de pile à combustible composite (210) inclut en outre un sous-collecteur d'air d'admission (170) destiné à raccorder un des modules d'air d'admission (141, 142, 143) à chacune des sous-interfaces d'air d'admission (313) de la pluralité de sous-modules de pile à combustible (310) ; et un sous-collecteur de gaz d'échappement (160) destiné à raccorder un des modules de gaz d'échappement (131, 132, 133) à chacune des sous-interfaces de gaz d'échappement (312) de la pluralité de sous-modules de pile à combustible (310).

6. Système de pile à combustible modulaire d'une quelconque revendication précédente, incluant en outre un échangeur de chaleur externe (180) configuré pour échanger de la chaleur entre de l'air d'admission et le gaz d'échappement.

7. Système de pile à combustible modulaire de la revendication 6, dans lequel l'échangeur de chaleur externe (180) est configuré pour transférer de la chaleur de l'air d'admission au gaz d'échappement en amont de la turbine (151).

8. Système de pile à combustible modulaire de quelconques des revendications 6 ou 7, dans lequel une première partie de l'échangeur de chaleur externe (180) est agencée en aval du compresseur (152) et en amont du collecteur d'air d'admission (140), et une seconde partie de l'échangeur de chaleur externe (180) est agencée en aval du collecteur de gaz d'échappement (130) et en amont de la turbine (151), de préférence dans lequel la première partie est configurée pour transférer de la chaleur à la seconde partie.

9. Système de pile à combustible modulaire de la revendication 6, dans lequel l'échangeur de chaleur externe (180) est configuré pour transférer de la chaleur du gaz d'échappement en aval de la turbine (151) à l'air d'admission en aval du compresseur (152).

10. Système de pile à combustible modulaire de quelconques des revendications 6 ou 9, dans lequel une première partie de l'échangeur de chaleur externe (180) est agencée en aval du compresseur (152) et en amont du collecteur d'air d'admission (140), et une seconde partie de l'échangeur de chaleur externe (180) est agencée en aval de la turbine (151), de préférence dans lequel la seconde partie est configurée pour transférer de la chaleur à la première partie ; et facultativement dans lequel le système de suralimentation (150) comprend l'échangeur de chaleur externe (180).

11. Système de pile à combustible modulaire d'une quelconque revendication précédente, incluant au moins deux turbocompresseurs de suralimentation raccordés en parallèle au collecteur d'air d'admission (140) et au collecteur de gaz d'échappement (130).

12. Système de pile à combustible modulaire d'une quelconque revendication précédente, dans lequel chacun de la pluralité de modules de pile à combustible (110) inclut en outre une conduite de gaz d'échappement (125) raccordant la pile à combustible (111) à l'interface de gaz d'échappement (112), et incluant en outre au moins un d'un échangeur de chaleur interne (122), d'un dispositif de post-combustion (121), et d'un dispositif d'oxydation, agencé, et des combinaisons de ceux-ci, à l'intérieur de la conduite de gaz d'échappement (125) ; facultativement incluant l'échangeur de chaleur interne (122) et le dispositif de post-combustion (121) agencés en série à l'intérieur de la conduite de gaz d'échappement (125), le dispositif de post-combustion (121) étant de préférence en amont de l'échangeur de chaleur interne (122).

13. Système de pile à combustible modulaire d'une quelconque revendication précédente, dans lequel chacun de la pluralité de modules de pile à combustible (110) inclut en outre une conduite d'alimentation en carburant raccordant la pile à combustible (111) à une interface d'alimentation en carburant (115), et incluant en outre au moins un d'un générateur de vapeur 128, d'un pré-reformeur (126), d'un reformeur, et d'un réacteur de dérive, agencé à l'intérieur de la conduite d'alimentation en carburant.

14. Système de pile à combustible modulaire d'une quelconque revendication précédente, dans lequel chacun de la pluralité de modules de pile à combustible (110, 410) et/ou chacun du modules de pile à combustible composites (210) inclut une interface **d'alimentation** en eau (114), le système de pile à combustible (100) comprenant en outre :
- un collecteur **d'alimentation** en eau (190) raccordé à chacune des interfaces **d'alimentation** en eau (114) des modules de pile à combustible (110, 410) et/ou des modules de pile à combustible composites (210), le collecteur d'alimentation en eau (190) contenant une pluralité de modules d'alimentation en eau (191, 192, 193), dans lequel chaque module d'alimentation en eau (191, 192, 193) est raccordé de façon libérable à au moins un module d'alimentation en eau adjacent (191, 192, 193) et raccordé à au moins une interface d'alimentation en eau (114).

15. Système de pile à combustible modulaire d'une quelconque revendication précédente, dans lequel chacun de la pluralité de modules de pile à combustible (110, 410) et/ou chacun des modules de pile à combustible composites (210) inclut une interface d'alimentation en carburant (115), la pile à combustible système (100) comprenant en outre :
- un collecteur d'alimentation en carburant raccordé à chacune des interfaces d'alimentation en carburant (115) des modules de pile à combustible (110, 410) et/ou de chacun des modules de pile à combustible composites (210), le collecteur d'alimentation en carburant contenant une pluralité de modules d'alimentation en carburant, dans lequel chaque module d'alimentation en carburant est raccordé de façon libérable à au moins un module d'alimentation en carburant adjacent et raccordé à au moins une interface d'alimentation en carburant (115).

16. Système de pile à combustible modulaire de la revendication 14 ou 15, incluant en outre au moins un d'un générateur de vapeur externe, d'un pré-reformeur externe, d'un reformeur externe, et d'un réacteur à dérive externe, raccordé au collecteur d'alimentation en carburant et/ou au collecteur d'alimentation en eau (190).
